# FASCICULE DE BREVET EUROPEEN

(11) **EP 3 262 996 B1**
(45) Date de publication et mention de la délivrance du brevet: **05.12.2018**
(21) Numéro de dépôt: 17171614.5
(22) Date de dépôt: 17.05.2017
(51) Int. Cl.: A47J 36/06

(54) **COUVERCLE DE RECIPIENT DE CUISSON MUNI D'UN BEC VERSEUR**
DECKEL EINES KOCHBEHÄLTERS MIT AUSGIESSELEMENT
COOKING CONTAINER LID PROVIDED WITH A POURING SPOUT

(30) Priorité: 22.06.2016 FR 1655793
(43) Date de publication de la demande: 03.01.2018
(73) Titulaire: SEB S.A., 69130 Ecully (FR)
(72) Inventeur: LORTHIOIR, Christophe, 74150 Bloye (FR)
(74) Mandataire: Bourrières, Patrice

(56) Documents cités:
- EP-A2- 1 996 052
- CA-A1- 2 455 023
- JP-B2- 5 441 929

## Description

La présente invention concerne un couvercle destiné à coopérer avec un récipient de cuisson, par exemple un couvercle de casserole, de sauteuse ou de faitout.

On connaît de la demande de brevet français EP1996052, un couvercle destiné à coopérer avec un récipient de cuisson et comprenant un capot adapté à recouvrir ledit récipient de cuisson et un jonc en silicone ceinturant le capot. Le jonc comporte une paroi qui s'étend radialement au-delà d'une périphérie du capot et qui est destinée à être agencée au-dessus du récipient de cuisson. La paroi présente une ouverture traversante qui permet un échappement de la vapeur.

Le jonc en silicone comporte une paroi tombante munie d'un orifice qui fait face à un bec verseur du récipient de cuisson. Cette coopération particulière de la paroi tombante, de l'orifice et du bec verseur permet une utilisation pour verser les aliments liquides ou pour égoutter les aliments solides.

Cependant, avec un tel couvercle, le bec verseur est agencé sur le récipient de cuisson. La réalisation de bec verseur sur les récipients de cuisson est une opération souvent couteuse, notamment parce qu'elle est réalisée en reprise, et parfois non réalisable, notamment en fonction des matériaux utilisés et des revêtements mis en oeuvre, par exemple de l'émail, de la céramique. De plus, les process de fabrication des récipients de cuisson n'autorisent pas une grande liberté dans la géométrie du bec verseur. Ainsi, la fonction « bec verseur » est souvent peu performante.

Le but de la présente invention est de remédier aux inconvénients précités et de proposer un couvercle de récipient de cuisson qui permette de simplifier la réalisation du récipient de cuisson avec lequel il est destiné à coopérer

Un autre but de l'invention est de proposer un couvercle de récipient de cuisson qui soit de conception simple et économique à mettre en oeuvre.

Ces buts sont atteints avec un couvercle destiné à coopérer avec un récipient de cuisson, comprenant un capot et un jonc en silicone ceinturant le capot, ledit jonc comportant une paroi qui s'étend radialement au-delà d'une périphérie du capot et qui est destinée, avec le capot, à recouvrir le récipient de cuisson, ladite paroi présentant au moins une ouverture traversante, caractérisé en ce que le jonc en silicone comporte un bec verseur disposé dans un prolongement radial à l'ouverture traversante.

Ainsi, la fonction « bec verseur » est reportée sur le couvercle, sur le jonc en silicone. En conséquence, le récipient de cuisson avec lequel il est destiné à coopérer peut comporter une fonction « bec verseur » simplifiée, voire ne pas comporter de fonction « bec verseur ».

La fonction « bec verseur » est reportée sur le jonc en silicone qui est généralement réalisé par une opération d'injection plastique. Une telle opération permet une grande liberté dans la géométrie du bec verseur et ainsi la fonction « bec verseur » peut être optimisée.

Par bec verseur, on comprend un canal de guidage du liquide dont la section transversale présente une forme de V ou de U évasée.

Avantageusement, le bec verseur est réalisé par une extension radiale qui s'étend au-delà d'une périphérie du jonc.

Une telle extension permet d'améliorer le guidage du liquide hors du récipient de cuisson lors de l'opération de versage.

De manière avantageuse, l'extension radiale s'étend au-delà d'une périphérie du récipient de cuisson avec lequel il est destiné à coopérer. Cette disposition permet également d'améliorer le guidage du liquide hors du récipient de cuisson lors de l'opération de versage, notamment d'éviter des coulures le long d'une paroi du récipient de cuisson.

Avantageusement, l'extension radiale s'étend depuis une face supérieure du jonc, au-dessus de la face supérieure.

De préférence, la paroi comporte une pluralité d'ouvertures traversantes prévues pour égoutter des aliments, le bec verseur étant disposé dans un prolongement radial aux ouvertures traversantes.

Une telle disposition permet de reporter une fonction « versage, égouttage » sur le couvercle, de manière complètement intégrée.

Avantageusement, le couvercle comporte deux becs verseurs, agencés notamment de manière diamétralement opposée.

Cette disposition permet d'obtenir un couvercle qui intègre deux fonctions : une fonction « bec verseur » et une fonction « versage, égouttage ». Dans une telle configuration, la pluralité d'ouvertures traversantes forme une prise d'air qui facilite l'écoulement du liquide lors du versage. De manière réciproque, l'ouverture traversante forme une prise d'air qui facilite l'écoulement du liquide lors de l'égouttage.

De préférence, le jonc comporte des moyens de centrage et/ou des moyens d'étanchéité du couvercle sur le récipient de cuisson.

Cette disposition permet d'obtenir de façon économique le positionnement du couvercle sur le récipient de cuisson et/ou l'étanchéité du couvercle sur le récipient de cuisson, les moyens de centrage et/ou les moyens d'étanchéité étant réalisés en même temps que le jonc, lors de l'opération d'injection plastique.

Avantageusement, les moyens de centrage et/ou les moyens d'étanchéité sont formés par au moins une paroi tombante portée par le jonc.

De préférence, le couvercle est destiné à coopérer avec un récipient de cuisson ayant une paroi latérale qui est prolongée vers le haut par une portion recourbée vers l'extérieur et les moyens de centrage et/ou les moyens d'étanchéité comportent une face concave agencée en périphérie du jonc et destinée à coopérer avec la portion recourbée du récipient de cuisson.

Cette disposition permet d'obtenir un bon assemblage du couvercle sur le récipient de cuisson et également d'éviter les fuites à la liaison couvercle/récipient de cuisson lors de l'opération de versage ou d'égouttage.

Avantageusement, le couvercle est destiné à coopérer avec un récipient de cuisson ayant une paroi latérale circulaire présentant un diamètre intérieur D et la paroi tombante agencée au niveau du bec verseur présente un diamètre extérieur D1 égal au diamètre intérieur D sur une zone angulaire supérieure à 90°, ladite zone angulaire étant centrée sur le bec verseur.

Ainsi, le bord tombant du couvercle est ajusté à la paroi latérale du récipient de cuisson, localement au niveau du bec verseur, sur une zone angulaire qui permet d'obtenir une très bonne étanchéité lors de l'opération de versage ou d'égouttage.

Cette disposition peut être appliquée lorsque le couvercle comporte deux becs verseurs, agencés notamment de manière diamétralement opposée. Ainsi, la paroi tombante agencée au niveau des becs verseur présente un diamètre extérieur D1 égal au diamètre intérieur D sur deux zones angulaires supérieures à 90°, chacune centrée sur un bec verseur. La paroi tombante présente un diamètre extérieur D2 égal au diamètre intérieur D moins quelques millimètres, par exemple D moins deux millimètres, sur les deux zones angulaires restantes.

Avantageusement, le jonc comporte deux zones d'appui de réception des pouces de l'utilisateur, dans le cas où le couvercle est destiné à coopérer avec un récipient de cuisson comportant deux poignées.

Cette disposition permet de maintenir le couvercle sur le récipient de cuisson lors de l'opération de versage ou d'égouttage. La matière du jonc permet d'obtenir des zones dont la température est acceptable au toucher.

De préférence, le capot est en verre.

Ainsi, le couvercle permet de voir l'intérieur du récipient de cuisson, notamment les aliments qui sont préparés.

L'invention concerne également un ensemble formé par au moins un récipient de cuisson et un couvercle tel que précédemment décrit.

De préférence, le récipient de cuisson est une poêle, une casserole, une sauteuse ou un faitout.

L'invention sera mieux comprise à l'étude du mode de réalisation pris à titre nullement limitatif et illustré dans les figures annexées dans lesquelles :
- La figure 1 est une vue en perspective d'un couvercle agencé sur un récipient de cuisson selon un mode particulier de réalisation de l'invention.
- La figure 2 illustre une vue en coupe selon la ligne II-II du couvercle agencé sur le récipient de cuisson de la figure 1.
- La figure 3 illustre une vue en coupe partielle selon le détail III du couvercle agencé sur le récipient de cuisson de la figure 2.
- La figure 4 illustre une vue du dessous du couvercle la figure 1.

On notera que, dans ce document, les termes «horizontal», «vertical», «inférieur», «supérieur», «longitudinal», «transversal», «haut», «bas», employés pour décrire le couvercle, font référence à ce couvercle en situation d'usage, lorsqu'il est monté sur un récipient de cuisson, lequel est posé sur un plan horizontal.

Comme on peut le voir aux figures de 1 à 4, un couvercle 1 coopère avec un récipient de cuisson 30 qui est une casserole. Le récipient de cuisson 30 comporte une paroi latérale 31 qui est prolongée vers le haut par une portion recourbée 32 vers l'extérieur. Le récipient de cuisson 30 comporte une poignée 35. Le couvercle 1 comprend un capot 2 adapté à recouvrir le récipient de cuisson 30. De manière avantageuse, le capot 2 est formé par une plaque de verre apte à permettre la vision dans le récipient de cuisson 30. Le couvercle 1 comprend un jonc 10 en silicone qui ceinture le capot 2. Le jonc 10 comprend une paroi 20 qui s'étend radialement au-delà d'une périphérie 3 du capot 2. Le jonc 10 en silicone est réalisé soit par injection plastique puis assemblé sur le capot 2, notamment par collage, soit par une opération de surmoulage sur le capot.

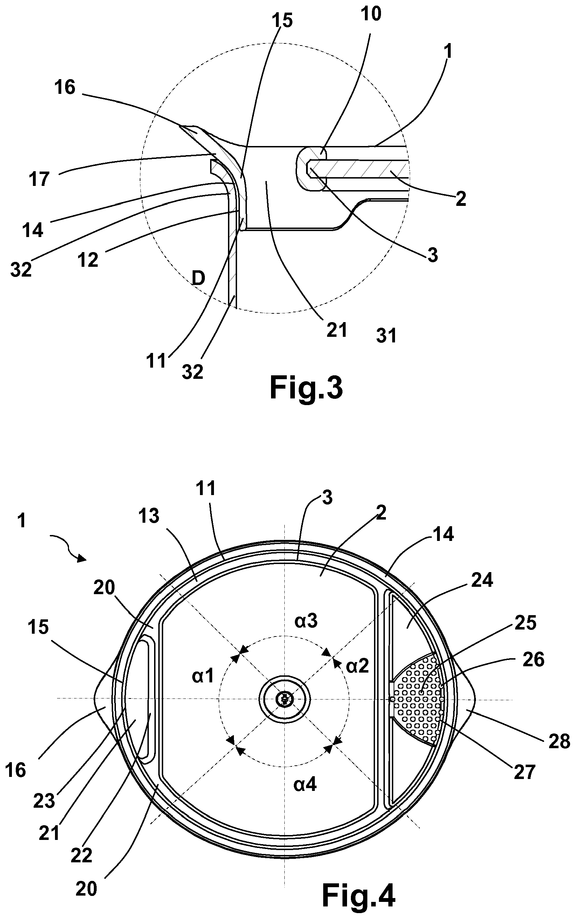

Le jonc 10 comporte des moyens de centrage et des moyens d'étanchéité pour permettre un assemblage étanche du couvercle 1 sur le récipient de cuisson 30. Les moyens de centrage et les moyens d'étanchéité comportent une paroi tombante 11 agencée sur une face inférieure 13 du jonc 10, en périphérie du jonc 10. La paroi tombante 11 présente une face externe 12 (Fig.3), verticale destinée à coopérer avec la paroi latérale 31 du récipient de cuisson 30. Les moyens de centrage et les moyens d'étanchéité comportent également une face concave 14 en périphérie du jonc 10 destinée à coopérer avec la portion recourbée 32 du récipient de cuisson 30. La face externe 12 de la paroi tombante 11 est agencée dans le prolongement de la face concave 14.

Le jonc 10 comporte une ouverture 21 traversante de forme allongée. L'ouverture 21 comprend un périmètre qui présente une partie droite 22, parallèle à un bord du capot 2 et une partie courbe 23, parallèle à la face externe 12. Le jonc 10 comporte dans la partie courbe 23 de l'ouverture 21 une paroi 15 (Fig.3) qui est formée vers le bas par la paroi tombante 11 et vers le haut par une extension radiale qui forme un bec verseur 16. Le bec verseur 16 comporte une face externe 17 qui est formée en partie par la face concave 14. Le bec verseur 16 s'étend au-delà de la périphérie du jonc 10 et au-delà de la portion recourbée 32 du récipient de cuisson 30.

La paroi 20 du jonc comporte une zone d'épaisseur réduite 24 qui comporte une pluralité d'ouvertures 25 traversantes prévues pour égoutter des aliments. La zone d'épaisseur réduite 24 comprend un périmètre qui présente une partie courbe 26, parallèle à la face externe 12. Le jonc 10 en silicone comporte, dans la partie courbe 26 de la zone d'épaisseur réduite 24, une paroi 27 qui est formée vers le bas par la paroi tombante 11 et vers le haut par une extension radiale qui forme un bec verseur 28. Les deux becs verseurs 16, 28 sont agencés de manière diamétralement opposée sur le couvercle 1.

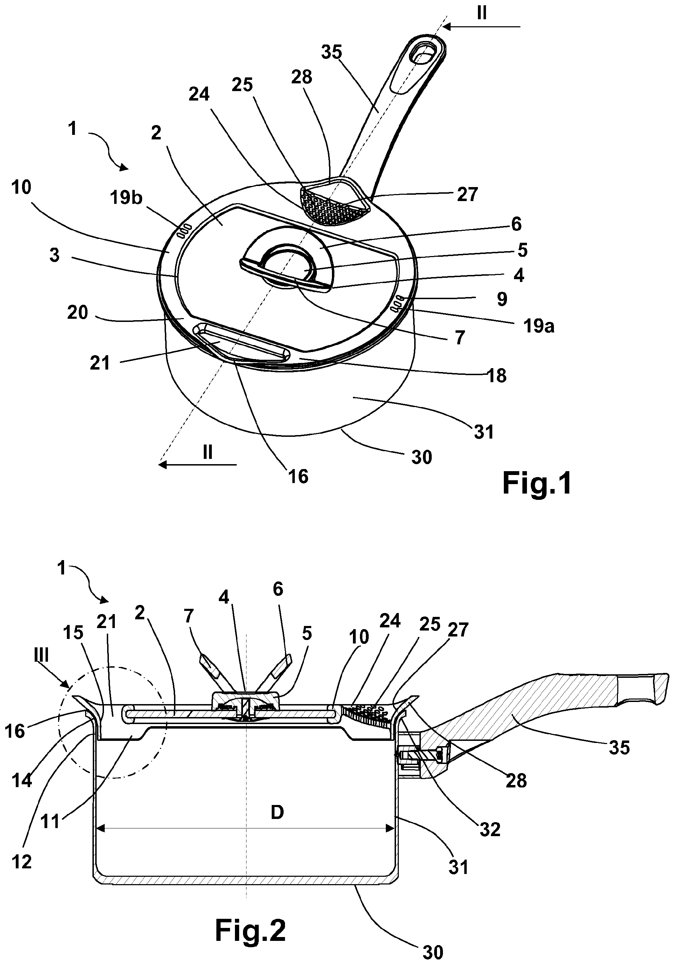

La paroi latérale 31 du récipient de cuisson présente un diamètre intérieur D (Fig.2). Telle que visible à la figure 4, la paroi tombante 11 présente un diamètre extérieur D1 égal au diamètre intérieur D sur une zone angulaire α1, supérieure à 90°, cette zone angulaire α1 étant centrée sur le bec verseur 16. La paroi tombante 11 présente également un diamètre extérieur D1 égal au diamètre intérieur D sur une zone angulaire α2, supérieure à 90°, cette zone angulaire α2 étant centrée sur le bec verseur 28. Ainsi, le diamètre de la paroi tombante 11 est ajusté au diamètre de la paroi latérale 31 du récipient de cuisson 30, localement au niveau des becs verseurs 16, 28. La paroi tombante 11 présente un diamètre extérieur D2 égal au diamètre intérieur D moins quelques millimètres, par exemple D moins deux millimètres pour une casserole de diamètre D égal à 200 millimètres, sur deux zones angulaires α3, α4 restantes. Ainsi, le diamètre de la paroi tombante 11 est légèrement inférieur au diamètre de la paroi latérale 31 du récipient de cuisson 30, localement sur les deux zones angulaires α3, α4 restantes pour faciliter le positionnement du couvercle 1 sur le récipient de cuisson 30 et admettre les dispersions de fabrication.

Le jonc 10 comporte sur une face supérieure 18 deux zones d'appui 19a, 19b de réception des pouces de l'utilisateur, dans le cas où le couvercle est destiné à coopérer avec un récipient de cuisson comportant deux poignées agencées de manière diamétralement opposée. Chaque zone d'appui 19a, 19b comporte des bossages 9a, 9b.

Le couvercle 1 comporte un organe de préhension 4 qui comprend un socle 5 fixé au capot 2 et deux volets 6, 7 pivotants. Un tel organe de préhension 4 est décrit dans le document EP1871206.

En fonctionnement, l'utilisateur saisit le récipient de cuisson 30 par la poignée 35 et le couvercle 1 par les volets 6, 7 de l'organe de préhension 4. Il oriente le bec verseur 16, 28 adapté à l'opération qu'il souhaite réaliser (versage ou égouttage) dans une direction adéquate par rapport à la poignée 35. Puis il incline le récipient de cuisson 30 en maintenant le couvercle 1 en appui contre la paroi latérale 31 et contre la portion recourbée 32 pour verser le liquide à travers l'ouverture 21 et le bec verseur 16 ou à travers les ouvertures 25 et le bec verseur 28. Le diamètre de la paroi tombante 11 étant ajusté au diamètre de la paroi latérale 31 du récipient de cuisson 30, localement au niveau des becs verseurs 16, 28, il n'y a aucune fuite entre le couvercle 1 et la paroi latérale 31.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le capot du couvercle est formé par une pièce métallique, notamment une pièce en acier inoxydable.

## Revendications

1. Couvercle (1) destiné à coopérer avec un récipient de cuisson (30), comprenant un capot (2) et un jonc (10) en silicone ceinturant le capot (2), ledit jonc (10) comportant une paroi (27) qui s'étend radialement au-delà d'une périphérie (3) du capot (2) et qui est destinée avec le capot (2) à recouvrir le récipient de cuisson (30), ladite paroi (27) présentant au moins une ouverture (21, 25) traversante, **caractérisé en ce que** le jonc (10) en silicone comporte un bec verseur (16, 28) disposé dans un prolongement radial à l'ouverture (21, 25) traversante.

2. Couvercle (1) selon la revendication 1, **caractérisé en ce que** le bec verseur est réalisé par une extension radiale (16, 28) qui s'étend au-delà d'une périphérie du jonc (10).

3. Couvercle (1) selon l'une des revendications 1 à 2, **caractérisé en ce que** la paroi (27) comporte une pluralité d'ouvertures (25) traversantes prévues pour égoutter des aliments, le bec verseur (28) étant disposé dans un prolongement radial aux ouvertures (25) traversantes.

4. Couvercle (1) selon l'une quelconque des revendications 1 à 3, **caractérisé en ce qu'**il comporte deux becs verseurs (16, 28), agencés notamment de manière diamétralement opposée.

5. Couvercle (1) selon l'une quelconque des revendications 1 à 4, **caractérisé en ce que** le jonc (10) comporte des moyens de centrage (11, 14) et/ou des moyens d'étanchéité (11, 14) du couvercle (1) sur le récipient de cuisson (30).

6. Couvercle (1) selon la revendication 5, **caractérisé en ce que** les moyens de centrage et/ou les moyens d'étanchéité sont formés par au moins une paroi tombante (11) portée par le jonc (10).

7. Couvercle (1) selon l'une des revendications 5 ou 6, **caractérisé en ce qu'**il est destiné à coopérer avec un récipient de cuisson (30) ayant une paroi latérale (31) qui est prolongée vers le haut par une portion recourbée (32) vers l'extérieur et **en ce que** les moyens de centrage et/ou les moyens d'étanchéité comportent une face concave (14) agencée en périphérie du jonc (10) et destinée à coopérer avec la portion recourbée (32) du récipient de cuisson (30).

8. Couvercle (1) selon l'une des revendications 6 à 7, **caractérisé en ce qu'**il est destiné à coopérer avec un récipient de cuisson (30) ayant une paroi latérale (31) circulaire présentant un diamètre intérieur D et **en ce que** la paroi tombante (11) agencée au niveau du bec verseur (16, 28) présente un diamètre extérieur D1 égal au diamètre intérieur D sur une zone angulaire α1, α2 supérieure à 90°, ladite zone angulaire α1, α2 étant centrée sur le bec verseur (16, 28).

9. Couvercle (1) selon l'une quelconque des revendications 1 à 8, **caractérisé en ce que** le jonc (10) comporte deux zones d'appui (19a, 19b) de réception des pouces de l'utilisateur, dans le cas où le couvercle (1) est destiné à coopérer avec un récipient de cuisson (30) comportant deux poignées.

10. Couvercle (1) selon l'une quelconque des revendications 1 à 9, **caractérisé en ce que** le capot (2) est en verre.

11. Ensemble formé par un récipient de cuisson (30) et un couvercle (1) selon l'une quelconque des revendications 1 à 10.

12. Ensemble selon la revendication 11, **caractérisé en ce que** le récipient de cuisson est une poêle, une casserole, une sauteuse ou un faitout.

## Patentansprüche

1. Abdeckung (1), die dazu bestimmt ist, mit einem Kochgefäß (30) zusammenzuwirken, umfassend eine Haube (2) und einen die Haube (2) umgebenden Ring (10) aus Silikon, wobei der Ring (10) eine Wand (27) aufweist, die sich radial über einen Umfang (3) der Haube (2) erstreckt und die dazu bestimmt ist, mit der Haube (2) das Kochgefäß (30) abzudecken, wobei die Wand (27) mindestens eine durchgehende Öffnung (21, 25) aufweist, **dadurch gekennzeichnet, dass** der Ring (10) aus Silikon einen Ausgießer (16, 28) aufweist, der in radialer Verlängerung zu der durchgehenden Öffnung (21, 25) angeordnet ist.

2. Abdeckung (1) nach Anspruch 1, **dadurch gekennzeichnet, dass** der Ausgießer durch eine radiale Verlängerung (16, 28) gebildet ist, die sich über einen Umfang des Rings (10) hinaus erstreckt.

3. Abdeckung (1) nach einem der Ansprüche 1 bis 2, **dadurch gekennzeichnet, dass** die Wand (27) mehrere durchgehende Öffnungen (25) aufweist, die vorgesehen sind, Nahrungsmittel abzutropfen, wobei der Ausgießer (28) in einer Verlängerung radial zu den durchgehenden Öffnungen (25) angeordnet ist.

4. Abdeckung (1) nach einem der Ansprüche 1 bis 3, **dadurch gekennzeichnet, dass** sie zwei Ausgießer (16, 28) aufweist, die insbesondere diametral gegenüberliegend angeordnet sind.

5. Abdeckung (1) nach einem der Ansprüche 1 bis 4, **dadurch gekennzeichnet, dass** der Ring (10) Zentriermittel (11, 14) und / oder Dichtmittel (11, 14) der Abdeckung (1) auf dem Kochgefäß (30) aufweist.

6. Abdeckung (1) nach Anspruch 5, **dadurch gekennzeichnet, dass** die Zentriermittel und / oder die Dichtmittel durch mindestens eine von dem Ring (10) getragenen abfallenden Wand (11) gebildet sind.

7. Abdeckung (1) nach einem der Ansprüche 5 oder 6, **dadurch gekennzeichnet, dass** sie dazu bestimmt ist, mit einem Kochgefäß (30) zusammenzuwirken, das eine Seitenwand (31) hat, die nach oben durch einen nach außen gebogenen Abschnitt (32) verlängert ist, und dass die Zentriermittel und / oder die Dichtungsmittel eine konkave Fläche (14) umfassen, die an dem Umfang des Rings (10) angeordnet ist und dazu bestimmt ist, mit dem gekrümmten Abschnitt (32) des Kochgefäßes (30) zusammenzuwirken.

8. Abdeckung (1) nach einem der Ansprüche 6 bis 7, **dadurch gekennzeichnet, dass** sie dazu bestimmt ist, mit einem Kochgefäß (30) zusammenzuwirken, das eine kreisförmige Seitenwand (31) hat, die einen Innendurchmesser D aufweist, und dass die die an dem Ausgießer (16, 28) angeordnete abfallende Wand (11) einen Außendurchmesser D1 aufweist, der gleich dem Innendurchmesser D über einen Winkelbereich α1, α2 ist, der größer als 90° ist, wobei der Winkelbereich α1, α2 auf dem Ausgießer (16, 28) zentriert ist.

9. Abdeckung (1) nach einem der Ansprüche 1 bis 8, **dadurch gekennzeichnet, dass** der Ring (10) zwei Stützzonen (19a, 19b) zur Aufnahme der Daumen des Benutzers im Fall aufweist, in dem die Abdeckung (1) dazu bestimmt ist, mit einem Kochgefäß (30), das zwei Griffe aufweist, zusammenzuwirken.

10. Abdeckung (1) nach einem der Ansprüche 1 bis 9, **dadurch gekennzeichnet, dass** die Haube (2) aus Glas besteht.

11. Anordnung, die aus einem Kochgefäß (30) und einer Abdeckung (1) nach einem der Ansprüche 1 bis 10 gebildet ist.

12. Anordnung nach Anspruch 11, **dadurch gekennzeichnet, dass** das Kochgefäß eine Pfanne, ein Kochtopf, eine Bratpfanne oder ein Schmortopf ist.

## Claims

1. Cover (1) destined to be used with a cooking vessel (30), including a lid (2) and a seal (10) in silicone encircling the lid (2), the said seal (10) includes a rim (27) which extends radially beyond the periphery (3) of the lid (2) and which is destined with the lid (2) to cover the cooking vessel (30), the said rim (27) presenting at least one through opening (21, 25), **characterised in that** the seal (10) in silicone includes a pouring spout (16, 28) positioned in a radial extension of the through opening (21, 25).

2. Cover according to claim 1, **characterised in that** the pouring spout is created by a radial extension (16, 28) which extends beyond the periphery of the seal (10).

3. Cover (1) according to one of the claims 1 to 2 **characterised in that** the rim (27) includes several through openings (25) provided for straining the food, the pouring spout (28) being positioned in a radial extension of the through openings (25).

4. Cover (1) according to one of the claims 1 to 3, **characterised in that** it includes two pouring spouts (16, 28), arranged so as to be diametrically opposed.

5. Cover (1) according to one of the claims 1 to 4, **characterised in that** the seal (10) includes the means for centering (11, 14) and/or the means for sealing (11, 14) the cover (1) onto the cooking vessel (30).

6. Cover (1) according to claim 5, **characterised in that** the centering means and/or the sealing means are formed by at least one inner rim (11) supported by the seal (10).

7. Cover (1) according to one of the claims 5 or 6, **characterised in that** it is destined to work with a cooking vessel (30) having a lateral rim (31) which is extended upwards by a portion turned back (32) towards the exterior and that the means for centering and/or sealing means include a concave face (14) at the periphery of the seal (10) and destined to work with the turned back portion (32) of the cooking vessel (30).

8. Cover (1) according to one of the claims 6 to 7, **characterised in that** it is destined to work with a cooking vessel (30) having a lateral circular rim (31) presenting an interior diameter D and that the inner rim (11) arranged at the position of the pouring spout (16, 28) presents an external diameter D1 equal to the interior diameter D at an angular zone α1, α2 greater than 90°, the said angular zone α1, α2 being centered on the pouring spout (16, 28).

9. Cover (1) according to one of the claims 1 to 8, **characterised in that** the seal (10) includes two support zones (19a, 19b) to accept the user's thumbs, in the case where the cover (1) is destined to work with a cooking vessel (30) having two handles.

10. Cover (1) according to one of the claims 1 to 9, **characterised in that** the said lid (2) is made of glass.

11. Ensemble formed by a cooking vessel (30) and a cover (1) according to one of the claims 1 to 10.

12. Ensemble according to claim 11, **characterised in that** the cooking vessel is a frying pan, a saucepan, a skillet or a stew pot.
